# EUROPEAN PATENT SPECIFICATION

(11) **EP 0 749 687 B1**
(45) Date of publication and mention of the grant of the patent: **28.08.2002**
(21) Application number: 96304629.7
(22) Date of filing: 21.06.1996
(51) Int. Cl.: A01K 97/12

(54) **A fish-bite indicator**
Bissanzeiger
Indicateur de touche

(30) Priority: 23.06.1995 GB 9512887
(43) Date of publication of application: 27.12.1996
(73) Proprietor: FOX DESIGN INTERNATIONAL LIMITED, Chelmsford, Essex CM3 5HQ (GB)
(72) Inventor: Fox, Clifford Royston, Chelmsford, Essex, CM3 5HQ (GB)
(74) Representative: Crouch, David John

(56) References cited:
- EP-A- 0 463 185
- FR-A- 2 698 760
- GB-A- 2 219 181
- GB-A- 2 262 209

## Description

The present invention relates to a fish-bite indicator.

GB-A-2,219,181 discloses a bite detector which comprises a rotatably mounted wheel over which, in use, a fishing line passes so that displacement of the line causes rotation of the wheel, a transmitter and means for sensing rotation of the wheel to cause the transmitter to transmit a signal to a remote receiver.

The present invention is directed to a fish-bite indicator having the features set out in the accompanying claim 1. Preferred features are set out in the subordinate claims 2 to 8.

Examples of a fish-bite indicator made in accordance with the present invention will now be described with reference to the accompanying drawings, in which :
- Figure 1: shows a front elevational view of a housing of such an example;
- Figure 2: shows a cross-sectional view of a front part of the housing shown in Figure 1 taken along the line II - II thereof;
- Figure 3: shows a rear view of the front part of the housing shown in Figures 1 and 2, together with some of the interior parts of the indicator;
- Figure 4: shows a part that is shown in Figure 3 on an enlarged scale, with further components not shown in Figure 3;
- Figure 5: shows a sectional view of parts shown in Figure 4 along the meandering line V - V shown therein;
- Figures 6 to 8: show views corresponding to Figures 1 to 3, of a modified construction of indicator;
- Figure 9: shows an electrical block circuit diagram of the indicator shown in Figures 1 to 3 or Figures 6 to 8;
- Figure 10: is a circuit diagram showing the circuit of Figure 9 in greater detail;
- Figure 11: shows a front view of a possible line-engagement component of the indicator;
- Figure 12: shows one possible form of mounting means for the engagement part shown in Figure 11;
- Figure 13: shows an alternative construction for such mounting means;
- Figure 14: shows a perspective view, from the opposite side, of a part shown in Figure 13;
- Figures 15 and 16: are diagrams of alternative arrangements of the components shown in Figure 13;
- Figure 17: shows a front elevational view of a housing of a receiver for use with the indicator shown in Figure 1;
- Figure 18: shows a rear view of a front part of the housing shown in Figure 17 together with some of the internal parts of the receiver;
- Figure 19: shows an electrical block circuit diagram of the receiver shown in Figures 17 and 18; and
- Figure 20: is a circuit diagram showing the circuit of Figure 19 in greater detail.

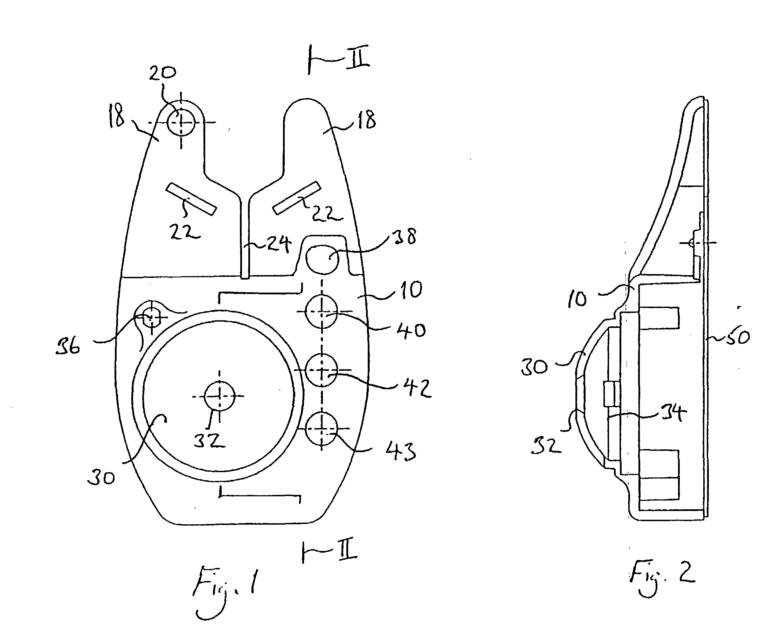

The fish-bite indicator shown in Figures 1 to 5 comprises a two-part synthetic plastics injection moulded housing 10 which may have an external screw-threaded metal shank (not shown) extending downwardly from its underside, to enable it to be secured to a bank stick.

The upper end of the housing 10 is bifurcated, so that it has two generally upwardly extending prongs 18, at the upper end of the left hand of which there is provided a light emitting diode (LED) 20.

Inwardly recessed ribs 22 are provided at the base of each prong 18 to reinforce the housing in those regions.

A slot 24 extends downwardly from the base of the bifurcation to expose a central portion 25 of a rotary part 26 which is embraced by the housing but which is outside the housing interior. This central part is formed with a waist 28, so that it has the form of a pulley-wheel. A generally circular part 30 of the housing 10 is provided underneath the bifurcation, slightly off-set from the longitudinal bisecting plane thereof, and is provided with a central aperture 32 to permit sound to travel more readily through the housing 10 from a generally circular electromagnetic buzzer 34 positioned immediately inwardly of the diaphragm cover 30. Immediately above and slightly to the left of the diaphragm cover 30 there is an on/off switch 36 extending outwardly from the housing 10.

Four rotary knobs 38, 40, 42 and 43 are provided as a linear array immediately to the right of the diaphragm cover 30, these knobs being, respectively, a volume control, a pitch or tone control, a first sensitivity control and a second sensitivity control for the buzzer.

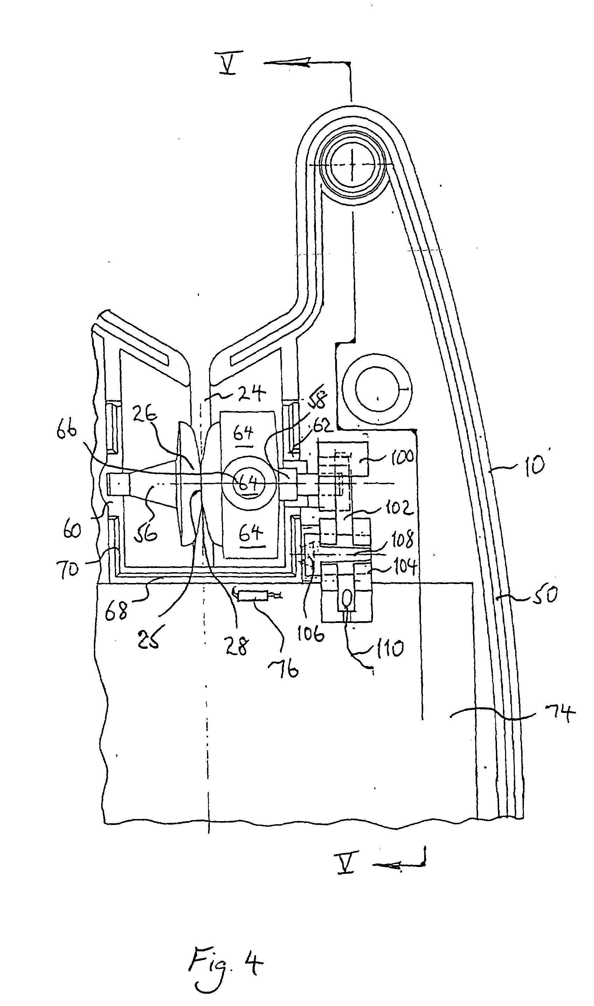

Figure 3 shows the interior of that half of the two-part housing 10 which is visible in Figure 1, with the other half of the housing 10 removed to reveal interior components of the fish-bite indicator. That edge of the housing half which faces the other half of the housing is formed with a longitudinally extending central rib 50. This engages a correspondingly formed longitudinally extending groove (not shown) formed on the corresponding edge of the other housing part.

Referring back to Figure 3, an inner wall 54 is formed in the housing and generally surrounds the slot 24 to form half of an enclosure which contains the rotary part 26.

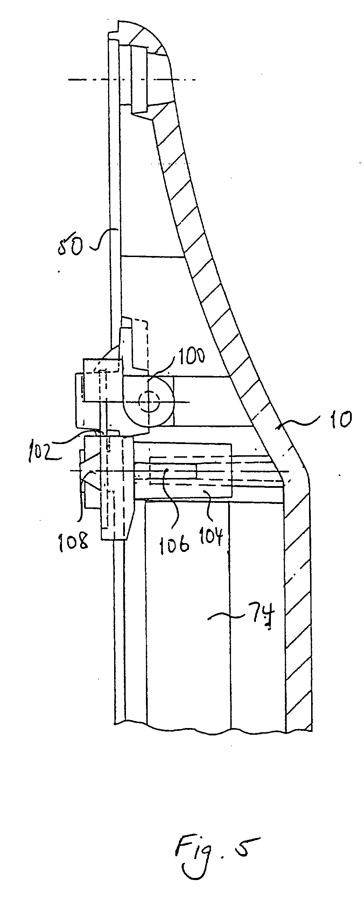

Figure 4 shows that the rotary part has a tapering spindly portion 56 extending in an intended horizontal direction away from the central portion 25. A second spindle portion 58 of the rotary part 26 extends outwardly away from the central portion 25 in the opposite direction to that of the spindle portion 56. Respective recesses are formed in respective vertical parts of the inner wall 54 to provide rotary bearing means 60 and 62 respectively for the two spindle portions 56 and 58 of the rotary part 26.

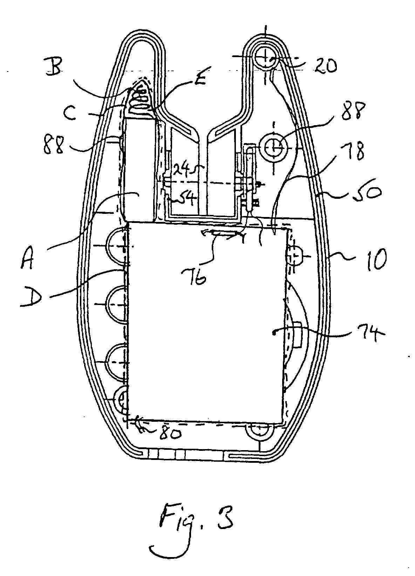

Four cylindrical blocks 64 (only three of which are visible in Figure 2) extend radially outwardly from the rotary axis of the rotary part 26, spaced apart at 90° intervals therearound, and house respective permanent magnets 66. The length of each cylinder 64 and permanent magnet 66 is such that, when the rotary part is rotated, the distal end of each magnet passes adjacent to a bottom 68 of the inner wall 54.

The edges of the inner wall 54 which face the other half of the housing 10, are provided with formations 70 which interengage with corresponding formations formed on corresponding inner edges of the other half of the rotary part enclosure, to form a seal therewith.

The slot 24 in each half of the housing 10 extends to the upper face of the bottom 68 of the enclosure so that any water which finds its way into the enclosure can readily drain outwardly therefrom.

From the foregoing description, it will be appreciated that the housing, together with the inner wall 54, defines a sealed interior. The latter contains a printed circuit board 74 which is fixed to the interior of the housing 10 and which includes a reed switch 76 mounted on the circuit board 74 immediately adjacent to the bottom 68 of the inner wall 54, within range of the magnetic fields of the permanent magnets 66 as the latter pass by the bottom 68 when the rotary part 26 rotates.

The printed circuit board 74 is connected to the LED 20 via leads 78, and power leads 80 extends from the printed circuit board 74 to connection terminals for a 9 volt alkaline battery (not shown).

A transmitter circuit board bearing a transmitter circuit A is mounted on the main circuit board 74 and extends upwardly therefrom towards one of the prongs 18. As will be described in greater detail hereinafter, the transmitter circuit A is connected so as to be powered by a battery connected across the connection terminals of the indicator. The transmitter circuit A includes a helical tapering transmitter antenna B extending upwardly from the transmitter circuit board into the interior of the prong 18, with its tapered end uppermost. A cover C in the form of a hood is placed over the antenna B and the board bearing the transmitted circuit A, and then the main circuit board 74 and the transmitter circuit board and the antenna B within the cover C are all encapsulated in a resin D. The cover C then entraps an air bubble E (or a bubble of a different gas) to inhibit contact between the resin D and the board and antenna B within the cover C.

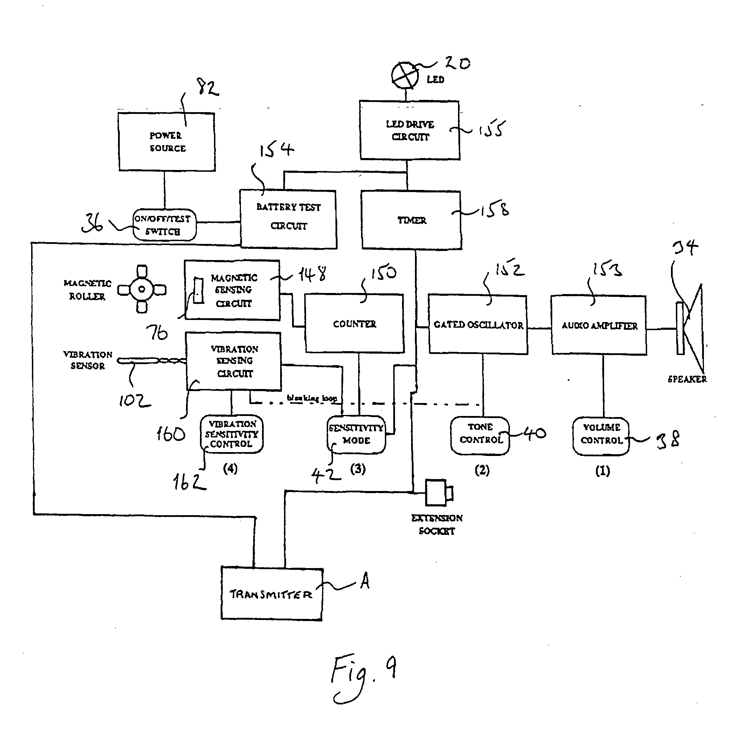

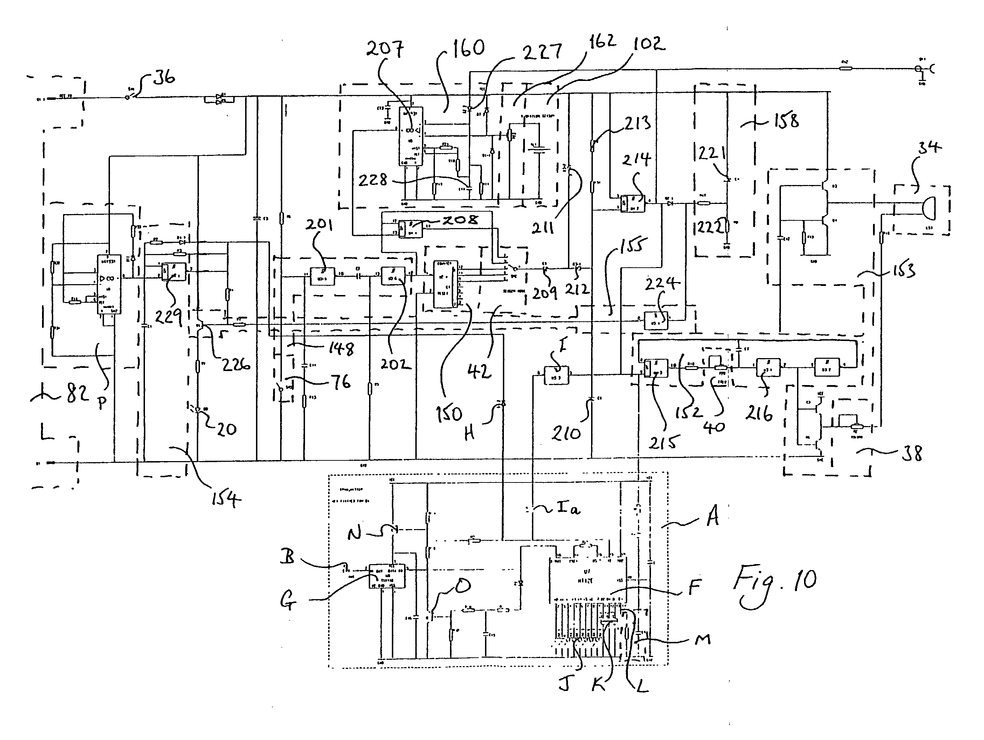

The on/off switch 36, the buzzer having the buzzer diaphragm 34, and each of the four control knobs 38, 40 42 and 43 are all connected to the circuit board 74 to define circuitry shown in greater detail, and described hereinafter, with reference to Figures 9 and 10.

An extension socket (not shown) may extend through the bottom of the housing 10 and is also connected to the printed circuit board 74.

Internally screw-threaded horizontally extending portions 88 are formed in the interior of the housing part shown in Figure 3, and apertures (not shown) formed in the other housing part are in registration with the portions 88 when the two housing parts are brought together, enable screws (not shown) to secure those two housing parts tightly together with the rib 50 engaging the groove in the other housing part.

The spindle portion 58 extends beyond the inner wall 54 and is secured to an upper mounting block 100 for a bimorph 102. A lower mounting block 104 for the bimorph 102 is secured to the wall 54 via a horizontally extending dovetail joint 106. The block 104 embraces the bimorph 102 around its further side as viewed in Figure 4, and a finger 108 of the block 104 abuts the front side of the bimorph 102, as viewed in Figure 4, to hold the lower part thereof relatively rigidly in an upright position. The upper mounting block 100, whilst being fixed securely to the spindle portion 58, is free to move with that spindle portion to the extent that tolerances between the portions of the wall 54 which are immediately adjacent to that spindle portion allow. As a result, any vibration of the rotary part is transmitted to the bimorph 102. This in turn will piezo-electrically generate a signal delivered to the output leads 110 from the bimorph 102.

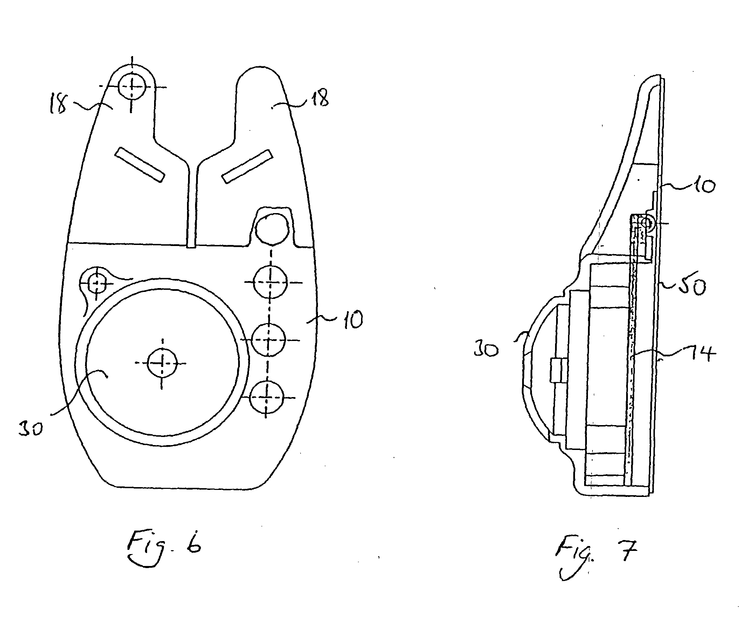

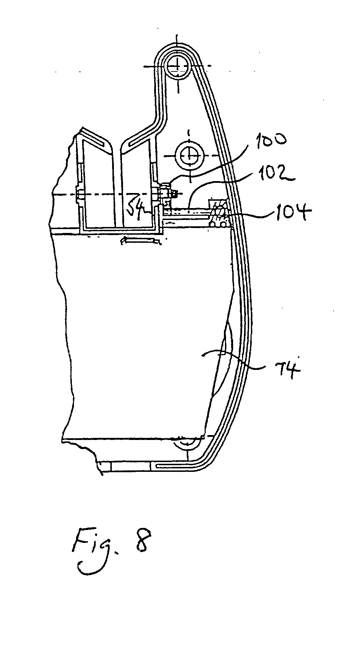

In the arrangement shown in Figures 6 to 8, the bimorph 102 is arranged horizontally, with the lower mounting block 104 being positioned further away from the wall 54 than in the Figure 1 to 5 embodiment, to accommodate the horizontal extent of the bimorph 102.

Much of the circuitry shown in Figure 9 corresponds to that of Figure 4 in EP-A- 0 570 117.

Thus, the reed switch 76 is part of a magnetic sensing circuit 148 connected to the buzzer 34 having a diaphragm 32 via a digital counter 150, a sensitivity mode selector 42, and a gated oscillator 152 connected in series in that order passing from the switch 76 to the buzzer 34. The output of the oscillator 152 is thus buffered. In addition, an audio amplifier 153 is connected between the gated oscillator 152 and the buzzer 34.

The volume control 38 and the pitch (or tone) control 40 are connected directly to the audio amplifier 153 and the gated oscillator 152 respectively to vary the volume and pitch (or tone) respectively of the sound emitted by the buzzer having the diaphragm 34.

The sensitivity control 42 is connected to the counter 150. Adjustment of the sensitivity control 42 as a result alters the number of pulses the counter receives from the reed switch 76 before the selector 42 issues a square-wave pulse to the gated oscillator 152.

As also shown in Figure 9, the battery 82 is connected to power the various parts of the circuitry via the on/off switch 36.

A fixed delay off type of timer 158 connected between the output of the counter 150 and the LED 20 latches to the on condition, to switch the LED on, for a predetermined duration of for example ten seconds upon receipt of a pulse from the counter 150.

Preferably, the circuitry comprises microprocessors and other integrated semi-conductor microchips duly programmed to operate in accordance with the manner of operation described herein.

The bimorph 102 is connected to a vibration sensing circuit 160 which is provided with a sensitivity control 162. The latter sets the threshold of signal required from the bimorph 102 before the vibration sensing circuit will provide an output signal. The latter is connected to the gated oscillator 152 via the sensitivity control 42.

A transmitter circuit A has inputs connected to respective outputs from the selector 42 and the battery test circuit 154.

Further details of the circuitry depicted merely in block circuit form in Figure 9, are shown in Figure 10. Components shown in Figure 10 which constitute a given part of the block circuit shown in Figure 9 are enclosed within a broken line box bearing the corresponding reference number.

It will be noted that the magnetic sensing circuit comprises the reed switch 76 connected in series with a debounce gate 201 and a buffer gate 202 connected in that order in series with one another. The output from the buffer gate 202 is connected to an input of the counter 150.

The vibration sensitivity circuit comprises the bimorph 102, across which is connected a potentiometer constituting the vibration sensitivity control 162. Its centre tap is connected to an inverting input of a comparator 207. The non-inverted input to the comparator 207 is maintained at a reference voltage via a resistance bridge. The output from the comparator 207 is connected to a NAND gate 208 having its other input connected to the output from the magnetic sensing circuit. The output from the NAND gate 208 is connected to a lowermost output line from the counter 150. This represents a line for a count of one, that is to say a line which gives an output pulse every time the counter 150 receives an input pulse. It therefore represents the most sensitive setting for the sensitivity mode switch 42. The outputs from the counter 150 are connected via the sensitivity mode selector 42 in the form of a multi-position switch, a timing circuit comprising the capacitors 209 and 210, the diodes 211 and 212 and a resistor 213, to a schmitt NAND gate 214. The output from this gate is delivered to the timer 158 which in turn has an output connected to switch on the light emitting diode 20 and the audio signal generating circuits. These comprise the gated oscillator 152 which incorporates the tone (or pitch) control 40.

The latter is a simple potentiometer connected between two of the gates 215 and 216, in series therewith, of the gated oscillator 152.

The output from the gate 214 is also connected to the timer 158 formed by a capacitor 221 and a resistor 222 which drive the LED 20 via the LED drive circuit 155 constituted by two gates 224 and 225 and a transistor 226.

The audio amplifier 153 comprises a bridge-type driver circuit connected to the output of the gated oscillator 152. The audio amplifier has its outputs connected to the buzzer 34 which is constituted by a piezo speaker.

The transmitter circuit A comprises a serial encoder F and a transmitter module G. The _TE pin of the former is connected to the battery test circuit 154 via a diode H, and to the detection signal triggered schmitt NAND gate 214 via a gate I and a diode Ia. Twelve data setting inputs of the serial encoder F are connected respectively to 8 DIP switches J, three preset switches K, and a detection signal indicating input L. The latter is also connected to the gate 214 via a resistor and diode in series with one another, and via a time delay circuit M.

The three switches K are set at manufacture, and correspond to three different possible LED colours. Thus, if the indicator has a red LED, the first K switch is set; if it has an amber LED, the second K switch is set, and if green then the third K switch is set.

The _TE terminal of the serial encoder F is also connected to the switching input of a switching transistor N via a resistor network, and the data output from the serial encoder F is connected to a data input of the transmitter module G and also to the switching input of a further switching transistor O also connected to the switching input of the transistor N via a diode, resistor and capacitor network.

When the indicator is in use, a line of a fishing rod passes over the rotary part 26. Any longitudinal movement of the line will therefore cause the reed switch 76 to be opened and closed at a frequency depending upon the speed of movement of the line. The pulses thus produced are debounced and buffered by the gates 201 and 202 respectively of the magnetic sensing circuit. These pulses are fed to the input of the counter 105, the outputs of which are connected to the selector 42. A first of these four outputs provide a pulse every time the counter receives a pulse, the second provides a pulse after every two pulses received by the counter, the third output after four received pulses and the fourth after eight. This effectively provides a sensitivity control, as progressively greater longitudinal movements of the line are required to produce an output as the switch position is raised. The final switch position selects the vibration sensing mode, in which the output from the vibration sensing circuit is connected, via the NAND gate 208, to trigger the timer 158 and also the gated oscillator 152. The LED 20 and the buzzer 34 will therefore emit visual and audio signals respectively directly a vibration of the line is transmitted through the rotary part 26 and thence to the bimorph 102.

The manner in which this is achieved is by the piezo-electrically generated voltage developed by the bimorph 102 being applied across the potentiometer 162 thus changing the potential at the centre tapping thereof. Adjustment of the position of that centre tapping thus constitutes the vibration sensitivity control, since it determines the level of voltage, for a given voltage developed by the bimorph 102, forwarded to the comparator 207. The non-inverting input of the comparator 207 is maintained at a constant voltage V_{REF} determining the smallest voltage which will be detected. Therefore, whenever vibration of the line occurs which is such as to produce a voltage across the sensor in excess of V_{REF}, the output of the comparator will momentarily change state. Pulses from the output of the comparator are combined with pulses from the magnetic sensing circuit 148 via the NAND gate 208 which forwards these pulses on to the last position of the multi-position switch sensitivity selector 204. The illustrated resistors 231, 232 and 233 connected respectively between the output of the debounce gate 201 and output of the selector 204, between the gate 208 and the last output from the selector 204, and between the output corresponding thereto from the counter 203 and that last output, are zero ohmed. They are used to configure various optional features.

Pulses from the selector 42 are fed to the timing circuit comprising the capacitors 209 and 210 and the diodes 211 and 212 and resistor 213. An output signal from this timer circuit is fed to the schmitt NAND gate 214. The output from that gate is used to trigger the audio gated oscillator 152 constituted by the gates 215, 216 and 217. The frequency of that gated oscillator may be varied by the potentiometer 218 to alter the tone (or pitch) of the audio signal emitted by the buzzer 34. The output from the gated oscillator 152 is fed to the bridge type driving circuit to drive the buzzer 34. The volume of its output can be controlled by way of the potentiometer 220. The output from the gate 214 also initialises the timer 158 formed by the capacitor 221 and the resistor 222 which drive the light emitting diode 20 via the LED drive circuit 155 constituted by the gate 224 and the transistor 226.

To prevent acoustic feed-back when the indicator is in the vibration sensing mode, the output of the gate 214 is also connected back to the non-inverting input of the comparator 207 via a diode 227. This effectively mutes the input for the duration of. the pulses. The capacitor 228 extends the length of the pulse slightly to allow for any resonance in the housing of the indicator to die away after signals to the speaker 34 have ceased.

The battery test circuit 154, comprising the integrated circuit 229 and its associated components, is enabled by enabling pulses from an oscillatory circuit P. The light emitting diode 20 will be illuminated upon issue of such pulses in the event that the battery voltage is unacceptable.

Both the inputs to the transmitter circuit A, that is to say the battery test circuit input from the diode H and the detection signal input from the diode Ia are normally high (in the sense of terminology used for digital circuitry) so that the _TE enable pin of the serial encoder F is also held high and the switching transistor N remains in the switched off condition. Thus, no power is provided for the transmitter circuit A.

In the event that one of the input lines to the transistor circuit A is pulled low, either because of a bite indication or because of a battery low detection, the _TE enable pin is also pulled low and in addition the switching transistor N is switched on, thus applying power to the transmitter circuit A. With the enabling of the serial encoder F open application of a low-level voltage at the _TE enable pin, the serial encoder itself is enabled and begins to encode its eight bit address, as preset by the eight dip switches J, and also the four data bits as set by the three preset switches K and the detection signal indicating input L. The latter is set high if a bite indication has occurred and low otherwise.

The output from the serial encoder F is fed directly to the transmitter module G and also to a pulse detector constituted by the diode, resistors and capacitor up-stream of the switching input of the transistor O. This places the transistor O in a switched on condition so that when the input of the transmitter circuit A goes high again, the switch input to the transistor O remains low for a predetermined period, thus also holding the switching input to the transistor N low for that same predetermined period and thus to ensure that no data is lost at the end of a transmission.

The delay circuit M ensures that corrupt data is not transmitted owing to any change in the state of the input to the transmitter circuit A during the course of a transmission.

The oscillator circuit P produces a pulse for a period of about 150 milliseconds in every second when triggered.

As a result of this electronic activity, a burst of pulses is transmitted on a carrier wave from the antenna B. The pulse train comprises a repetition of the bits in series corresponding to the states of the dip switches J, the preset switches K and the detection signal indicating input L.

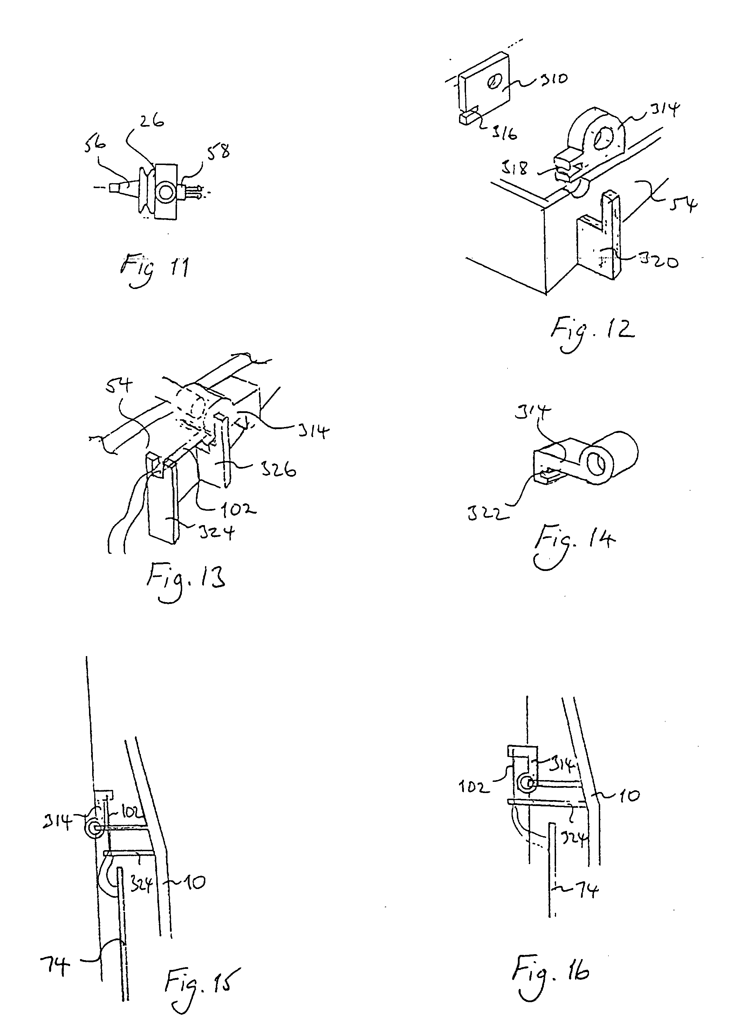

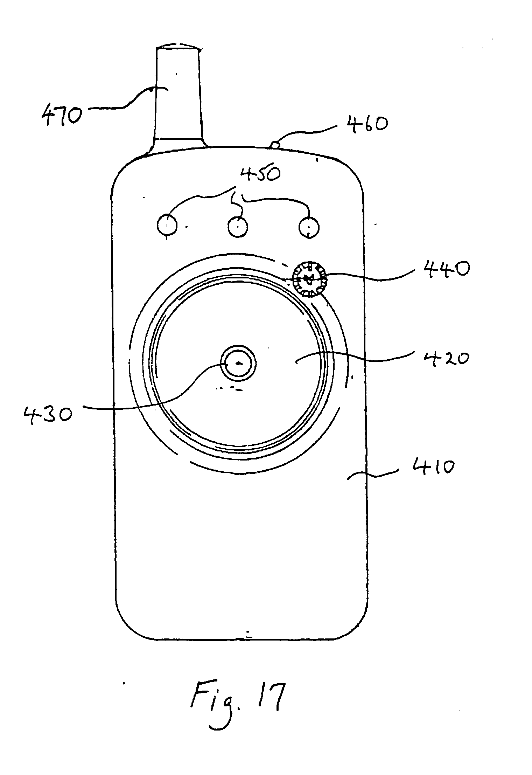

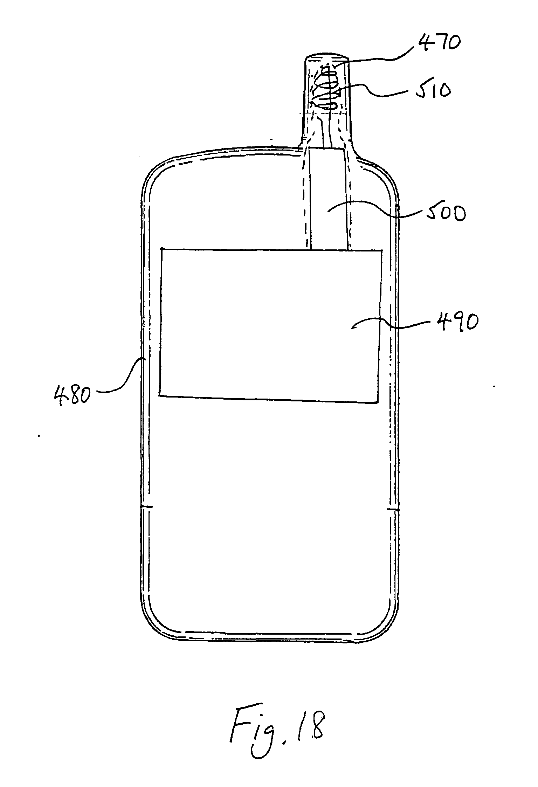

The receiver shown in Figures 17 and 18 is adapted to pick up radio signals from any and every one of the three indicators each one being as shown and described with reference to Figures 1 to 10, the three indicators having respective ones of the factory set switches K in the set condition to enable the receiver to distinguish between signals transmitted from the different indicators of the trio. The latter themselves have different coloured LED's as the diode 20: one red, one amber, and one green.

The receiver shown in Figures 17 and 18 comprise a housing 410 formed with a dome 420 which provides an acoustic chamber on the interior side of the housing 410. The dome 420 itself having a central circular aperture 430 to enable sound from the interior of the dome 420 to exit from the housing 410.

The housing 410 is also provided with a volume control knob 440, three light emitting diodes (LED's) 450 which emit a red, amber and green light respectively, an on/off switch 460 and an antenna enclosure 470.

As with the indicator, the receiver housing 410 is in two parts the edge of one of which is provided with a longitudinally extending rib 480 which engages a correspondingly formed longitudinally extending groove (not shown) formed on the corresponding edge of the other housing part. Figure 18 shows the interior of the housing part which is visible in Figure 17. Figure 18 thus shows how circuit board 490, a receiver module board 500 connected thereto, and a tapering helical antenna 510 connected to the receiver module board 500 are all enclosed within the housing 410, the helical antenna 510 being housed within the antenna enclosure 470.

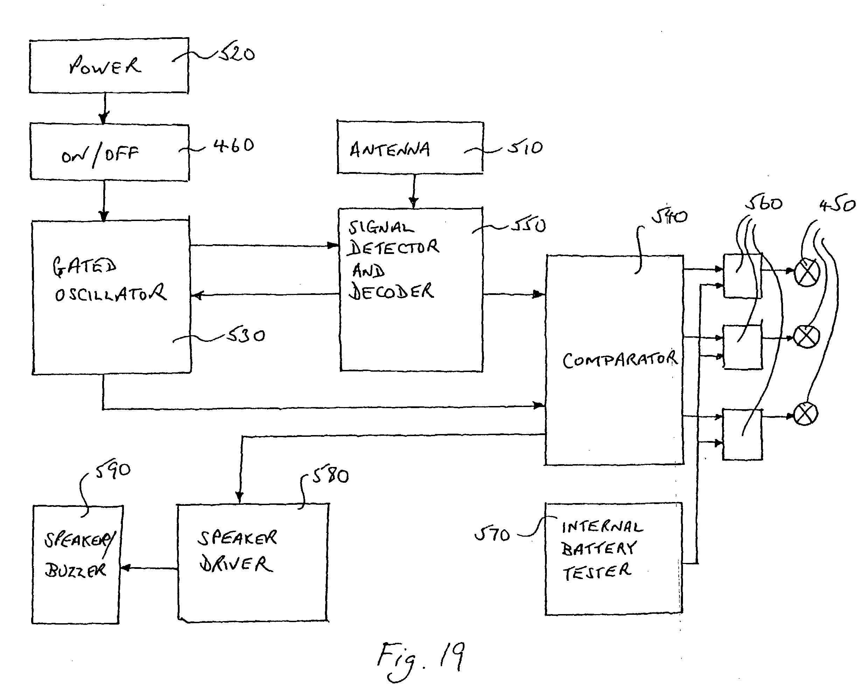

Figure 19 shows a block circuit diagram of the electrical and electronic circuitry contained within the housing 410. This circuit comprises a power source, for example a rechargeable nickel-cadmium battery 520 connected via the on/off switch 460 to a gated oscillator 530. The latter is connected to provide power to a comparator 540 which is connected to receive signals from a signal detector and decoder 550. The detector and decoder 550 in turn is connected to an antenna 510 and has an output connected to an input to the gated oscillator 530 so that, in a manner to be described in greater detail hereinafter, when the signal detector 550 provides a detect signal for the gated oscillator 530, the latter powers up the circuitry including the comparator 540.

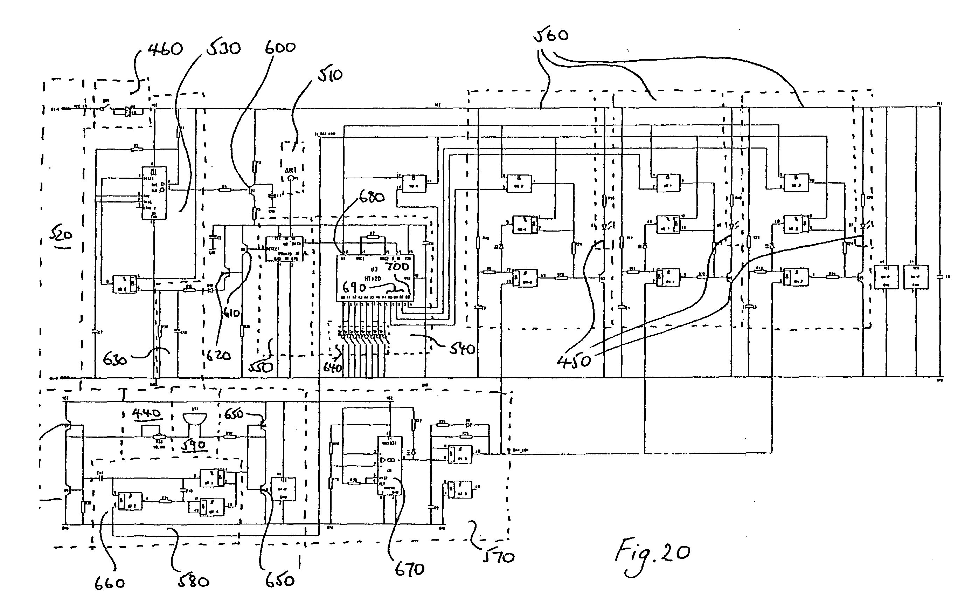

Respective outputs from the comparator 540 are connected to respective inputs of three LED drivers 560 connected to the LED's 450 respectively. An internal battery tester circuit 570 is provided with an output connected to all three drivers 560. A further output from the comparator 540 is connected to a speaker driver 580 having an output connected to drive a piezo-electric speaker 590. The circuitry of the circuit diagram shown in Figure 19 is shown in even greater detail in Figure 20 in which broken line boxes have been drawn around those components of the circuitry shown in Figure 20 which correspond to respective blocks of Figure 19, the reference numerals used in Figure 20 being the same as those for Figure 19.

It will be seen that the circuitry in Figure 20 is based upon a frequency modulated superhet receiver module. The positive terminal of the battery 520 is connected to the signal detector and decoder 550 and the comparator 540 via the on/off switch 460 and a switching transistor 600. A detect output from the signal detector and decoder 550 is connected to the gated oscillator 530 via first and second switching transistors 610 and 620. The latter is provided with a timing circuit 630 to maintain effectively a signal to the gated oscillator 530 for a predetermined period after the signal from the detect output of the signal detect and decoder 550 goes low.

The comparator 540 is provided with a set of eight dip switches 640 which are configured in precisely the manner of the dip switches K on each of the three indicators associated with this receiver. The comparator 540 also has three outputs 690 corresponding to the K inputs of the transmitter, and an output 700 corresponding to the L input of the transmitter.

The speaker driver 580 comprises four transistors 650 driven by a oscillator 660. The battery tester 570 comprises a comparator 670 having a built-in voltage reference.

The module board 500 and antenna 510 may be shrouded in a hood, and these two parts together with the board 490 may be fully incapsulated in resin, in a manner similar to the circuit boards for the indicator.

In operation, with the on/off switch 460 switched to the on condition, the gated oscillator 530 periodically switches on the switching transistor 600 to provide power to the signal detector and decoder 550. By doing this for a short duration at the end of each period, a relatively low amount of power is used to keep a watch for incoming signals. In the event that a signal is being received at the instant power is momentarily applied to the signal detector and decoder 550, the detect output therefrom switches the transistor 610 which in turn switches the transistor 620 to hold the gated oscillator 530 in its reset condition. This therefore ensures the continued application of power to the signal detector and decoder 550 and the comparator 540 for the duration of the incoming signal and a short period thereafter as determined by the timing circuit 630. This ensures that, if transmissions arrive in quick succession, there is no failure in the detection of the first part of each transmission. This gives the system, as far as possible with the limited band width available a "real time response".

In this powered-up condition, data from the signal detector and decoder 550 is fed to the comparator 540. This will first compare the eight bits of the incoming signal with the condition of its dip switches 640. If these match, all twelve bits of the incoming signal are repeated a set number of times. The VT pin 680 of the comparator 540 goes high and the last four bits of the incoming signal are latched on to the driver outputs of the comparator 540. In the event that one of the outputs 690 goes high, corresponding to a bite indication from a selected one of the bite indicators, and the detection signal output 700 is also high to indicate the presence of a bit detection signal, the associated driver 560 is triggered to switch on the associated LED 450 to emit light therefrom having a colour which corresponds to the bite indicator transmitting the received signal. It will be appreciated that each driver 560 comprises a gated oscillator to cause the associated LED to flash on and off. At the same time, the detection signal output 700 causes the speaker 590 to emit an intermittent sound via the speaker driver 580. This occurs for a predetermined latched period.

In the event that the detection signal output 700 of the comparator 540 remains low upon receipt of a signal, only the relevant LED driver 560 is triggered without the speaker driver 580 being triggered, to indicate that the battery of one of the bite indicators is failing, and also to indicate which bite indicator has a failing battery.

In the event that the receiver battery tester 570 provides a signal, all three LED drivers 560 are triggered, but not the speaker driver 580.

It will be appreciated that the period of duration of the gated oscillator 530 is such as to ensure that the shortest transmission from one of the bite indicators is not missed, and also so that the receiver is powered up long enough for it to stabilise.

Numerous variations and modifications of the illustrated indicator will readily occur to a person of ordinary skill in the art without taking the resulting construction outside the scope of the present invention as defined by the claims. For example, whilst the receiver shown in Figures 18 to 20 is constructed to receive a signal from any one of three different indicators and to show which of the three indicators is transmitting a signal, it would still be useful to have a receiver with only one diode associated with only one bite indicator. In a very simple construction, only one detection alarm needs to be provided, either one LED or one speaker, so that only one detect line instead of four needs to be provided from the comparator 540 simply to provide an indication of a bite detection from one detector having its dip switches set in the same manner as the receiver.

As shown in Figure 11, the second spindle portion 58 of the rotary part 26 may be in two part form spaced apart by an axially extending slot, with enlarged portions at their free ends, to provide a snap-fitting feature. Thus such a rotary part 26 may have its first spindle portion 56 inserted into a first trunnion portion 310 as shown in Figure 12, and then another trunnion portion 314 may be snap fitted on to the second spindle portion 58. This second trunnion portion 314 may then be secured to the inner wall 54 of the indicator.

In the modification shown in Figure 12, the bimorph 102 is received in respective slots 316 and 318 respectively of the trunnion parts 310 and 314. A further mounting portion 320 is secured to the inner wall 54 and provides a mount for the electrical connection to the bimorph 102 (not shown in Figure 12).

In the modification shown in Figures 13 and 14, the second trunnion part 314 is generally L-shaped, and has a groove 322 on the inner side of its limb further from the actual trunnion. This receives one end of a bimorph 102 the other end of which is received in a mounting 324 also secured to the inner wall 54 of the indicator. A further mounting 326 restricts downward motion of this assembly.

The Figure 13 arrangement is shown as a side view in Figure 15 which also shows the leads from the bimorph 102 connected to the printed circuit board 74. Figure 16 shows a further arrangement in which the bimorph 102 is held on the side of the rotary part axis further from the printed circuit board 74.

## Claims

1. A fish-bite indicator having a housing (10), a sensor contact part (26) which is outside the housing interior and which is in contact with a line of a fishing rod when the indicator is in use, sensor circuitry inside the housing (10) coupled to the sensor contact part (26) to produce an electrical signal in dependence upon a movement of such a line, and battery connection points which are connected to the sensor circuitry and which are connected to a battery when the indicator is in use, in which the indicator also has a transmitter (A,B) within the housing connected to receive power from the connection points, and also connected to the sensor circuitry to transmit a radio detection signal upon receipt of such an electrical signal, and in which the housing (10) has two projecting parts (18) which project in an intended upward direction from the main body of the housing (10) and from opposite sides of the sensor contact part (26) respectively, **characterised in that** the transmitter (A,B) includes a helical radio transmission antenna (B) which is within one of the projecting parts (18).

2. A fish-bite indicator according to claim 1, **characterised in that** the transmitter (A,B) and/or the antenna (B) is provided with a cover (C) encapsulated within a material (D) which has set solid also around the sensor circuitry so that the material (D) which encapsulates the transmitter (A,B) and/or the antenna (B) is integral with that which encapsulates the sensor circuitry, the cover (C) entrapping a bubble of air and/or other gas to inhibit contact between the encapsulating material (D) and the transmitter (A,B) and/or the antenna (B).

3. A fish-bite indicator according to claim 1 or claim 2, **characterised in that** a power-low circuit (154) is also connected to the battery connection points to provide a power-low electrical signal in the event that the power provided by a battery connected to the terminals is below a predetermined threshold.

4. A fish-bite indicator according to claim 3, **characterised in that** the transmitter (A,B) is connected to the power-low circuit (154) to transmit a power-low radio signal upon receipt of a power-low electrical signal from the power-low circuit (154).

5. A fish-bite indicator according to any preceding claim, **characterised in that** the radio signals are digital radio signals.

6. A fish-bite indicator according to claim 5, **characterised in that** each radio signal comprises an identifying code to reduce the likelihood of interference from a similar neighbouring indicator.

7. A fish-bite indicator according to any preceding claim, **characterised in that** it is provided with a receiver unit which receives radio signals from the indicator and provides a visual and/or audible indication that it has received a radio signal from the indicator.

8. A combination **characterised by** a plurality of indicators, each according to any one of claims 1 to 6, and a receiver unit as mentioned in claim 7, in which each indicator is set to emit the same identifying code so that the receiver can pick up a radio signal from any one of the plurality of indicators, the indicators emitting respective different signals to enable the receiver to determine which of the plurality of indicators is transmitting a given signal, the receiver being provided with means (450) to give respective different visual and/or audible signals for the indicators, for example light emitting diodes (450) of respective different colours.

## Patentansprüche

1. Bissanzeiger, aufweisend ein Gehäuse (10), ein Sensorkontaktteil (26), das sich außerhalb des Innenraumes des Gehäuses befindet und das bei Gebrauch des Anzeigers mit einer Leine einer Angelrute in Kontakt steht, eine Sensorschaltung innerhalb des Gehäuses (10), die mit dem Sensorkontaktteil (26) gekoppelt ist, um in Abhängigkeit von einer Bewegung einer solchen Leine ein elektrisches Signal zu erzeugen, und Batterieanschlußpunkte, die mit der Sensorschaltung verbunden sind und die bei Gebrauch des Anzeigers mit einer Batterie verbunden sind, wobei der Anzeiger auch einen Sender (A, B) innerhalb des Gehäuses aufweist, der so verbunden ist, dass er von den Anschlußpunkten Leistung empfängt, und der auch mit der Sensorschaltung verbunden ist, um auf den Empfang eines solchen elektrischen Signals hin ein Radiodedektionssignal zu übertragen, und wobei das Gehäuse (10) zwei vorstehende Teile (18) aufweist, die in eine gedachte Aufwärtsrichtung vom Hauptkörper des Gehäuses (10) aus bzw. von gegenüberliegenden Seiten des Sensorkontaktteils (26) aus vorstehen, **dadurch gekennzeichnet, dass** der Sender (A, B) eine schraubenförmige Radiosendeantenne (B) umfaßt, die sich innerhalb eines der vorstehenden Teile (18) befindet.

2. Bissanzeigter nach Anspruch 1, **dadurch gekennzeichnet, dass** der Sender (A, B) und/oder die Antenne (B) mit einer Abdeckung (C) versehen ist, die in einem Material (D) eingeschlossen ist, das auch um die Sensorschaltung herum gefestigt ist, so dass das Material (D), das den Sender (A, B) und/oder die Antenne (B) einschließt, einstückig mit demjenigen ist, das die Sensorschaltung einschließt, wobei die Abdeckung (C) eine Blase aus Luft und/oder einem anderen Gas einschließt, um einen Kontakt zwischen dem einschließenden Material (D) und dem Sender (A, B) und/oder der Antenne (B) zu verhindern.

3. Bissanzeiger nach Anspruch 1 oder 2, **dadurch gekennzeichnet, dass** eine Schaltung (154) für niedrige Leistung ebenfalls mit den Batterieanschlußpunkten verbunden ist, um ein elektrisches Signal für niedrige Leistung zu liefern, wenn die von einer mit den Anschlußstellen verbunden Batterie gelieferte Leistung unterhalb eines vorgegebenen Schwellenwertes ist.

4. Bissanzeiger nach Anspruch 3, **dadurch gekennzeichnet, dass** der Sender (A, B) mit der Schaltung (154) für niedrige Leistung verbunden ist, um auf den Empfang eines elektrischen Signals für niedrige Leistung von der Schaltung (154) für niedrige Leistung hin ein Radiosignal für niedrige Leistung auszusenden.

5. Bissanzeiger nach einem der vorstehenden Ansprüche, **dadurch gekennzeichnet, dass** die Radiosignale digitale Radiosignale sind.

6. Bissanzeiger nach Anspruch 5, **dadurch gekennzeichnet, dass** jedes Radiosignal einen Idenifizierungscode aufweist, um die Wahrscheinlichkeit einer Störung durch einen ähnlichen benachbarten Anzeiger zu verringern.

7. Bissanzeiger nach einem der vorstehenden Ansprüche, **dadurch gekennzeichnet, dass** er mit einer Empfängereinheit ausgestattet ist, die Radiosignale vom Anzeiger empfängt und eine visuelle und/oder hörbare Anzeige der Tatsache, dass sie ein Radiosignal vom Anzeiger empfangen hat, liefert.

8. Kombination, **gekennzeichnet durch** eine Vielzahl von Anzeigern, jeder gemäß einem der Ansprüche 1 bis 6, und eine Empfängereinheit gemäß Anspruch 7, wobei jeder Anzeiger so eingestellt ist, dass er den selben Identifizierungscode sendet, so dass der Empfänger ein Radiosignal von irgendeinem aus der Vielzahl der Anzeiger aufnehmen kann, wobei die Anzeiger jeweilige verschiedenen Signale aussenden, um dem Empfänger die Bestimmung zu ermöglichen, welcher der aus der Vielzahl der Anzeiger ein gegebenes Signal sendet, wobei der Empfänger mit Mitteln (450) versehen ist, um jeweilige verschiedene visuelle und/oder hörbare Signale für die Anzeiger zu geben, beispielsweise Licht emittierende Dioden (450) mit jeweiligen verschiedenen Farben.

## Revendications

1. Un indicateur de touches de pêche, ayant un boîtier (10), une partie de contact pour capteur (26), placée à l'extérieur du boîtier et qui est en contact avec une ligne d'une canne à pêche lorsque l'indicateur est en utilisation, un circuit de capteur, intérieur au boîtier (10), couplé à la partie de contact au capteur (26) afin de produire un signal électrique selon un déplacement d'une telle ligne, et des points de connexion de batterie, reliés au circuit de capteur et reliés à une batterie lorsque l'indicateur est en utilisation, dans lequel l'indicateur a également un transmetteur (A,B) placé dans le boîtier, relié afin de recevoir de la puissance depuis les points de connexion, et également relié au circuit de capteur pour transmettre un signal de détection radio à la réception d'un tel signal électrique, et dans lequel le boîtier (10) a deux parties (18) en saillie, se projetant en une direction montante prévue depuis le corps principal du boîtier (10) et depuis les côtés opposés de la partie de contact au capteur (26), respectivement, **caractérisé en ce que** le transmetteur (A,B) comprend une antenne de transmission radio (B) hélicoïdale, formant l'une des parties en saillie (18).

2. Un indicateur de touches de pêche selon la revendication 1, **caractérisé en ce que** le transmetteur (A,B) et/ou l'antenne (B) est/sont munis d'un couvercle (C) encapsulé dans un matériau (D) massif ayant durci par prise autour du circuit de capteur, de manière que le matériau (D) qui encapsule le transmetteur (A,B) et/ou l'antenne (B) soit formé d'une seule pièce avec celui qui encapsule le circuit de capteur, le couvercle (C) emprisonnant une bulle d'air et/ou d'un autre gaz, afin d'empêcher tout contact entre le matériau encapsulant (D) et le transmetteur (A,B) et/ou l'antenne (B).

3. Un indicateur de touches de pêche selon la revendication 1 ou la revendication 2, **caractérisé en ce qu'**un circuit basse puissance (154) est également relié aux points de connexion à la batterie, afin de fournir un signal électrique de basse puissance dans l'éventualité où la puissance fournie par une batterie connectée aux bornes est inférieure à un seuil prédéterminé.

4. Un indicateur de touches de pêche selon la revendication 3, **caractérisé en ce que** le transmetteur (A,B) est relié au circuit de basse puissance (154) pour transmettre un signal radio de basse puissance à la réception d'un signal électrique basse puissance émanant du circuit basse puissance (154).

5. Un indicateur de touches de pêche selon l'une quelconque des revendications précédentes, **caractérisé en ce que** les signaux radio sont des signaux radio numériques.

6. Un indicateur de touches de pêche selon la revendication 5, **caractérisé en ce que** chaque signal radio comprend un code d'identification visant à réduire le risque d'interférence depuis un indicateur similaire se trouvant dans le voisinage.

7. Un indicateur de touches de pêche selon l'une quelconque des revendications précédentes, **caractérisé en ce qu'**il est muni d'une unité réceptrice, recevant des signaux radio depuis l'indicateur et fournissant une indication visuelle et/ou audible du fait qu'il a reçu un signal radio venant de l'indicateur.

8. Une combinaison **caractérisée par** une pluralité d'indicateurs, chacun selon l'une quelconque des revendications 1 à 6, et une unité réceptrice tel que mentionnée à la revendication 7, dans laquelle chaque indicateur est agencé pour émettre le même code d'identification de manière que le récepteur puisse capter un signal radio venant de l'un quelconque parmi la pluralité d'indicateurs, les indicateurs émettant des signaux différents respectifs afin de permettre au récepteur de déterminer quel est celui parmi la pluralité des indicateurs qui transmet un signal donné, le récepteur étant muni de moyens (450) pour fournir des signaux visuels et/ou audibles différents respectifs pour les indicateurs, par exemple des diodes photoémettrices (450) ayant des couleurs respectives différentes.
